# EUROPEAN PATENT APPLICATION

(11) **EP 4 603 980 A1**
(43) Date of publication of application: **20.08.2025**
(21) Application number: 24305235.4
(22) Date of filing: 13.02.2024
(51) Int. Cl.: G06F 11/36, G06F 3/0481

(54) **SYSTEM AND METHOD FOR VERIFYING PROPERTIES OF MULTI-AGENTS SYSTEMS**

(71) Applicant: Institut Mines Telecom, 91120 Palaiseau (FR); University of Genoa, 16126 Genova (IT)
(72) Inventor: FERRANDO, Angelo, 16010 Genova (IT); MALVONE, Vadim, 91940 Les Ulis (FR)
(74) Representative: Atout PI Laplace

(57) **Abstract**

The invention relates to a modular and efficient model checking tool for verifying properties of multi-agents systems. A multi-agent system is described in the form of a syntactically error-free model description and a property to be verified is defined by a syntactically error-free logical formula. The model checking tool comprises:
- a selection component configured for selecting a model checker component among a plurality of model checker components, wherein a model checker component defining a class of models, a class of logics, and an analyzing method, the model checker component being selected according to the syntactically error-free model description and logical formula; and
- a verification component configured for operating the selected model checker component with the syntactically error-free model description and logical formula and for checking whether the multi-agent system satisfies the property.

## Description

### TECHNICAL FIELD

The present invention is in the field of formal verification of software systems, and relates to a model checking tool and to a method for verifying properties of multi-agent systems.

### BACKGROUND

Software quality is a current and paramount goal in software development, nowadays. Buggy software cost loss of money, and methodologies that can guarantee high software quality are needed and precious.

Techniques for checking safety properties of software systems mainly rely on the use of model checking tools.

Model checking tools or model checkers allow checking whether a finite-state model of a system meets a given specification.

In order to solve such a problem algorithmically, both the model of the system and its specification are formulated in some precise mathematical language. To this end, the problem is formulated in a formal task, namely to check whether a model satisfies a given logical formula. An important class of model checking methods has been developed for checking models of hardware and software designs where the specification is given by a temporal logic formula.

The inputs to a model checker are a description of the system to be analyzed and of a property, often expressed as temporal formula that is expected to hold on the system. The model checker either confirms that the property holds or reports that it is violated, and is able to provide a counterexample.

This general concept applies to many kinds of logics and many kinds of structures. The structure is usually given as a hardware or software component description in an industrial hardware description language or a domain-specific language. Such a component corresponds to a finite state machine (FSM), i.e., a directed graph consisting of nodes (or vertices) and edges. The nodes represent states of a system, the edges represent possible transitions that may alter the state, and atomic propositions represent basic properties that hold at a point of execution.

A system composed of multiple rational components that interact with each other to accomplish some goals in a cooperative or adversarial manner, is commonly designated as a Multi-Agent System (MAS).

Multi-Agent Systems (MAS) are used to design, model, analyze, and simulate complex systems involving multiple interacting entities, whose coordination helps to achieve a collective goal or to promote system stability. These autonomous entities, known as agents, can be distributed and heterogeneous, and act in an open, evolving environment.

Multi-Agent Systems are used in a variety of fields, including artificial intelligence, economics, and sociology. The fields of application are evolving with the growing of Internet of Things, with the huge volume of data produced by social networks, or with planetary phenomena (such as natural disasters, or epidemics). To analyze such complex distributed systems, there is a need for specific model checking tools.

There are nowadays few tools that deal with model checking for multi-agent system (MAS).

A popular model checker for MAS is known as 'MCMAS' (Model Checker for Multi-Agent Systems). MCMAS is a centralized tool that allows automatic verification of specifications using epistemic and cooperation modalities, in addition to the standard temporal modalities.

A drawback of MCMAS is that it provides a graphical user interface that is difficult to execute. Moreover, it does not cover all existing models and logics for strategic reasoning.

Another well-known tool is the model checker known as 'STV' (for "StraTegic Verifier") for MAS. STV for MAS is also a centralized tool that is used to develop specific theoretical research works, and does not have the objective to be extended by other developers. A drawback of STV for MAS is that it is not designed for industries where people are not experts of formal verification techniques. Moreover, it does not cover several models and logics for strategic reasoning.

The main drawbacks of existing tools are their lack of modularity, usability, distributivity, and efficiency.

Usually the logics and models used in existing model checking tools are hard-coded in the tool, and so they cannot be easily changed or extended, as developers have to work on the existing code, thereby limiting the usability of the tool.

Moreover, the existing model checking tools are in general not adapted for an easy use by non-expert users. The existing tools lack user-friendly interface that would allow non-expert users to proceed with formal verification of multi-agent systems.

Therefore, there is a need for a model checking tool for multi-agent systems that solve or mitigate the aforementioned problems of the prior art solutions.

### BRIEF SUMMARY OF THE INVENTION

The invention is defined by the appended independent claims. Additional features and advantages of the concepts disclosed herein are set forth in the description which follows, and in part will be obvious from the description, or may be learned by practice of the described technologies.

The features and advantages of the concepts may be realized and obtained by means of the components pointed out in the appended claims. These and other features of the described technologies will become more fully apparent from the following description and appended claims.

The present invention offers a modular and efficient model checking tool.

In a preferred embodiment, the model checking tool operates for multi-agent systems.

The model checking tool of the present invention provides an adaptable user interface that allows both experts and non-experts in the field of formal verification to operate the tool for multi-agent system verification purposes.

Several and various application domains may benefit from using the model checker tool of the present invention, and to name a few, any domains interested in avoiding cyberattacks, industrial domains of space and defense, to guarantee system correctness of the devices, particularly in complex systems.

A first aspect of the invention relates to a model checking tool for verifying a property of a multi-agent system, the multi-agent system being described in the form of a syntactically error-free model description and the property being defined by a syntactically error-free logical formula. The model checking tool comprises:
- a selection component configured for selecting a model checker component among a plurality of model checker components, wherein a model checker component defining a class of models, a class of logics, and an analyzing method, the model checker component being selected according to the syntactically error-free model description and logical formula; and
- a verification component configured for operating the selected model checker component with the syntactically error-free model description and logical formula and for checking whether the multi-agent system satisfies the property.

In an embodiment, the selection component is further coupled to a model checker interface configured to analyze the syntactically error-free model description and logical formula, to determine to which class of model among a plurality of predefined classes of models the syntactically error-free model belongs, and to which class of logics among a plurality of predefined classes of logics the syntactically error-free formula belongs.

In an embodiment, the model checker interface is further configured to determine, given a combination of a model with a logic, an analyzing method based on model and logic specifications of the syntactically error-free model and logical formula, like a number of states or a number of strategic quantifiers.

In an embodiment, the analyzing method is selected in a group comprising at least implicit analyzing methods, explicit analyzing methods, abstracted analyzing methods.

In an embodiment, a class of logics may be temporal logics or strategic logics.

In an embodiment, a class of temporal logics may be a Linear Temporal Logic (LTL) or a Computation Tree Logic (CTL).

In an embodiment, a class of strategic logics may be an Alternating-time Temporal Logic (ATL) or a Strategy Logic (SL).

In an embodiment, the model checking tool further comprises a parsing component configured for checking a model description representing a multi-agent system is a syntactically error-free model description and for checking a logical formula defining a property to be verified for the multi-agent system is syntactically error-free.

Another object of the invention, is a system for verifying properties of a multi-agent system within a communication network. The system comprises:
- an input component configured for entering data allowing to define a multi-agent system by a model description and to define a property of the multi-agent system to be verified by a logical formula; and
- a model checking tool for receiving from the input component data comprising a model description of the multi-agent system and a logical formula defining a property of the multi-agent system to be verified.

In an embodiment, the input component comprises a graphical user interface configured for allowing a non-expert user or an expert user in the field of formal verification entering data to define the model and the property.

In an embodiment, the graphical user interface is configured to allow a non-expert user entering data in natural language, and to allow an expert user entering data in a text-based input language.

In an embodiment, the input component is further configured for displaying a result provided by the verification component of the model checking tool.

In an embodiment, the system further comprises a computing device having a graphical user interface configured for allowing a software developer in the field of formal verification to define and develop models, logics and verification methods for the model checking tool.

Another object of the present invention is a computer implemented method for verifying properties of a multi-agent system, the method being operated on a syntactically error-free description of a model representing a multi-agent system and on a syntactically error-free logical formula defining a property of the multi-agent system to be verified. The method comprises the steps of:
- selecting a model checker component among a plurality of model checker components, wherein the selected model checker component defining a class of models, a class of logics and an analyzing method, the model checker component being selected according to the syntactically error-free model description and logical formula; and
- operating the selected model checker component with the syntactically error-free model description and logical formula for checking whether the multi-agent system satisfies the property.

In an embodiment, the step of selecting a model checker component comprises the steps of:
- analyzing the syntactically error-free model description to determine to which class of models among a plurality of predefined classes of models, the syntactically error-free model belongs;
- analyzing the logical formula to determine to which class of logics among a plurality of predefined logics, the syntactically error-free logical formula belongs; and
- selecting a combination of a model with a logic among the determined class of models and class of logics, and of an analyzing method.

In an embodiment, the method further comprises the steps of:
- receiving a description of a model representing a multi-agent system and a logical formula defining a property of the multi-agent system to be verified;
- parsing the received model description and logical formula to check if the model description and the logical formula are syntactically error-free; and
- in case the model description or the logical formula are not syntactically error-free, reformulating the model and the logical formula.

In an embodiment, the method further comprises the step of defining a model description and a logical formula through a graphical user interface, said graphical user interface being configured for allowing a non-expert user or an expert user entering data to define a model description and a logical formula.

In an embodiment, the step of entering data to define a model description and a logical formula is realized in natural language for a non-expert user.

In an embodiment, the step of entering data to define a model description and a logical formula is realized in a text-based input language for an expert user.

The present disclosure further includes a computer-readable medium for storing code instructions effective to cause a device to perform at least the steps of the method discussed above, and throughout this description, when executed by a computer.

Another object of the present invention is a general purpose computing device comprising a graphical user interface configured for defining in natural language a model description of a multi-agent system and a property to be verified by a logical formula, thereby allowing a non-expert user in the field of formal verification to proceed with the verification process.

In an embodiment, the graphical user interface is further configured for defining in text-based input language a model description of a multi-agent system and a property to be verified by a logical formula, thereby allowing an expert user in the field of formal verification to proceed with the verification process.

Yet, another object of the present invention is a computing device comprising a graphical user interface configured for allowing a high-level software developer in the field of formal verification to upload instantiations of models, of formulas, and of model checking methods.

The following description presents several examples of embodiments of the device of the invention. These examples are not intended to limit the scope of the invention.

The illustrated exemplary embodiments present both the essential characteristics of the invention as well as additional characteristics linked to the embodiments considered.

### BRIEF DESCRIPTION OF THE DRAWINGS

Embodiments of the invention will now be described with reference to the accompanying drawings, in which:
Figure 1 is a schematic diagram depicting a general context for implementing the system of the invention;
Figure 2 shows general steps for operating the system of the invention for execution of property verification, according to an embodiment of the invention;
Figure 3 illustrates a flow interaction of a non-expert user and a flow interaction of an expert user with a Graphical User Interface for users according to the invention;
Figure 4 is a schematic block diagram of the components for selecting a model checker component according to an embodiment of the invention;
Figure 5 is a schematic illustration of the functional architecture of a system for model checking of multi-agent systems according to the invention;
Figure 6 illustrates an example flow interaction of a developer with a Graphical User Interface for a developer according to the invention.

### DETAILED DESCRIPTION OF THE INVENTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

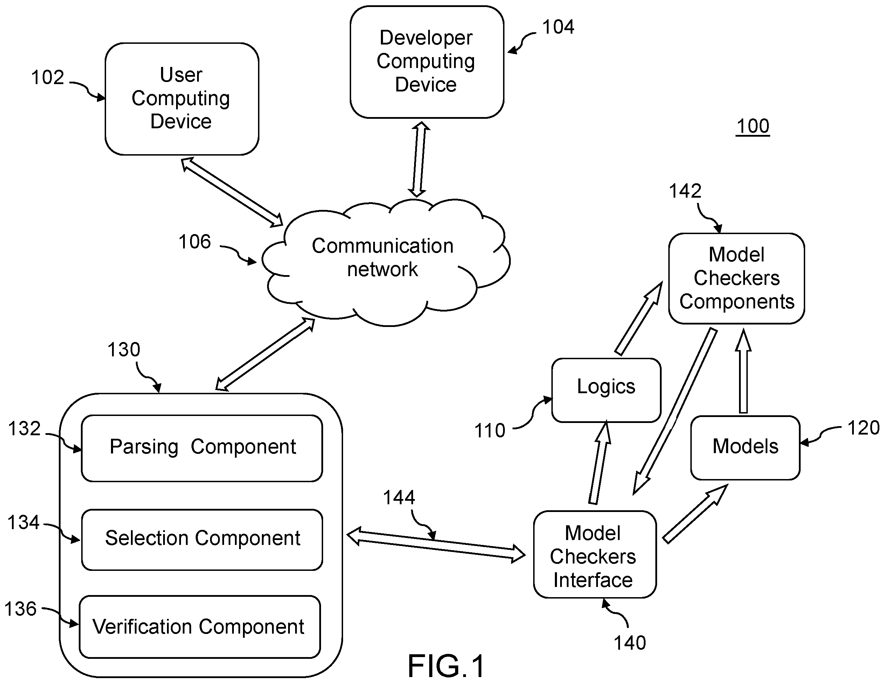

Going first to figure 1, a general environment 100 in a context of a communication network 106, is shown for implementing and operating the system of the invention in an embodiment.

For sake of clarity but not as a limitation, the context is described with a user computing device 102, a developer computing device 104, a model checking tool 130 coupled via a link 144 to a model checker interface 140, a model checker component 142, a set of Logics 110 defining rules and symbols for representing and reasoning about properties, and a set of Models 120 defining models for representing multi-agents systems.

The user computing device 102 may be a general purpose computer configured for allowing a user entering data to describe a multi-agent system by a model and to define by a logical formula a property of the multi-agent system to be verified.

The developer computing device 104 may be a general purpose computer configured for allowing a user having competencies in software development to work on different development aspects of the model checking tool, such as formal verifications, optimizations, or developments at low-level implementations.

Advantageously, the overall verification system of the present invention offers a natively distributed solution, wherein the different tasks of a verification process are decomposed into several independent entities or functions, which can operate over different computing devices and which interact to complete the verification process.

The present invention allows increasing the computational power and taking advantage of High Performance Computing (HPC) architectures. Since the functional entities are distributed, the core of the verification process may be operated distantly from a user's machine.

Whereas figure 1 shows a configuration wherein the model checker tool 130 is distant from a user computing device and from a developer computing device, it is intended that other embodiments may be devised by the person skilled in the art, such as having a model checking tool implemented on a user computing device and/or having a model checking tool implemented on a developer computing device.

In alternative various implementations, Logics and Models may be collected by and registered on different devices.

In an embodiment, the model checking tool 130 is implemented on a server computing device of a communication network.

The model checking tool 130 comprises at least a selection component 134 and a verification component 136.

The selection component 134 is configured for selecting a model checker component ("MC component" in short) among a plurality of model checker components. A model checker component defines a class of model and a class of logic analyzing method.

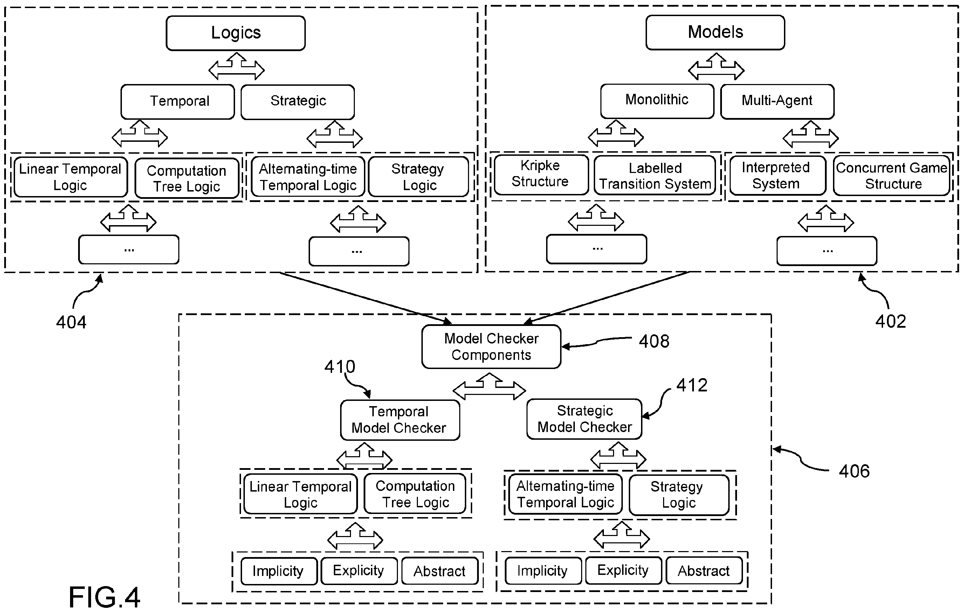

The model checking tool is further coupled to the Model Checker Interface 140 ("MC interface" in short). As further described with reference to figure 4, the MC interface is operating with the Model Checker Components 142 to allow analyzing a received model and logical formula (i.e. a syntactically error-free model and formula) and provide a model checker component. More specifically, the model checker interface is configured to determine to which class of model the model belongs among a plurality of predefined classes of models from the set of Models 120, and configured to determine to which class of logic analyzing method the logical formula belongs among a plurality of predefined classes of logic analyzing methods from the set of Logics 110.

The verification component 136 is configured for enabling a property verification step. The verification component allows operating a selected MC component with the model and logical formula and to check whether the multi-agent system satisfies or not the property to be verified.

In a preferred embodiment, the model checking tool 130 further comprises an integrated parsing component 132.

The parsing component 132 is configured for checking a syntactically error-free description of a model representing a multi-agent system and of a logical formula defining a property to be verified for the multi-agent system.

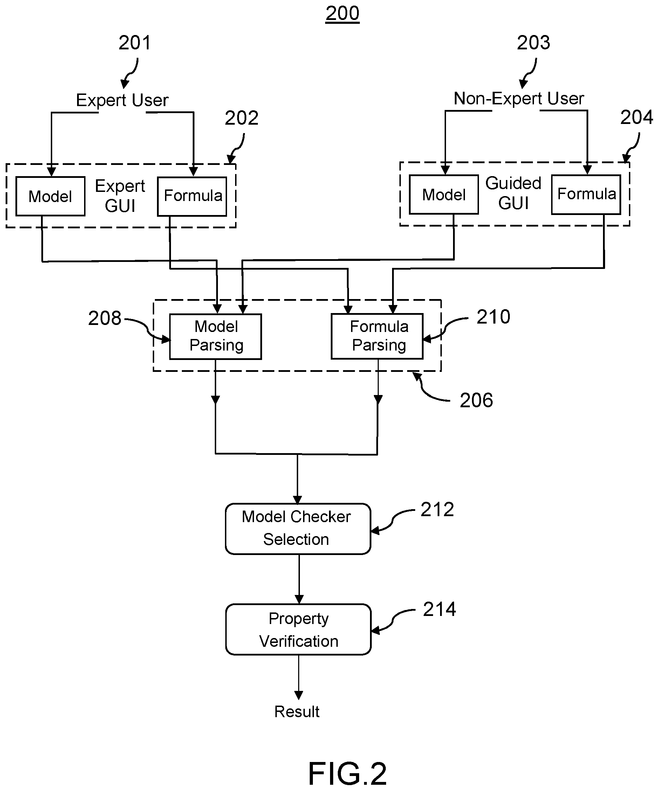

Going now to figure 2, a sequence of steps for operating the system of the invention for the execution of property verification is described.

Generally, the model checking tool operates on a syntactically error-free description of a model representing a multi-agent system and on a syntactically error-free logical formula defining a property to be verified for the multi-agent system, both being either received directly error-free or being checked through an integrated parsing operation.

To achieve a syntactically error-free model and formula, the process must have a preliminary parsing step 206 allowing to parse a model (Model Parsing function 208) and to parse a logical formula (Formula Parsing function 210).

Advantageously, the system of the invention allows both expert users 201 and non-expert users 203 to operate a verification process from a user computing device.

In the context of the invention, an expert user 201 is considered a user having at least some experience in model checking (MC) for MAS, whereas a non-expert user 203 is considered a user with no or very few experience in MC for MAS and who requires to be fully or as much as possible guided to complete his/her own verification goals.

Advantageously, the system of the invention offers a novel graphical user interface (GUI) that is adaptable to the expertise level of a user. As shown on the figure, an expert user 201 may have access to a dedicated expert user GUI 202, whereas a non-expert 203 user may have access to a different dedicated non-expert GUI 204.

In more detail, in case of expert users, the GUI for expert 202 allows a user to define both a model (i.e. the system to verify) and a logical formula (i.e. property to be verified), with a text-based input language. By offering such text-based input, the expert user can then freely define both models and logical formulas without guidance.

This characteristic may also be exploited to easily integrate this interface architecture with existing ones, whatever an application software is used. The GUI interface of the present invention may be compatible to be part of different applications.

In case of non-expert users, the GUI for non-expert 204 ("Guided GUI" in short) offers guidance functions to help user defining both models and logical formulas.

In an embodiment, the GUI for non-expert relies on guidance functions based on Natural Language Processing (NLP) techniques.

Advantageously, a non-expert user is guided to describe a model and a logical formula in a natural way. The Guided GUI of the present invention further comprises functions to operate a synthesis of a user described model and logical formula by gathering resulting answers once a user has answered questions.

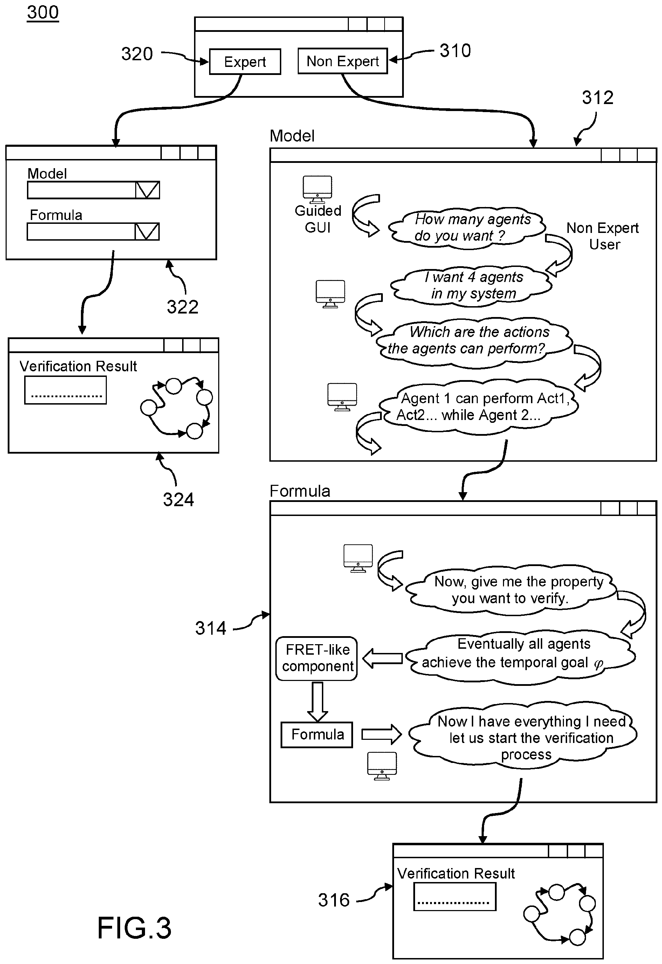

Figure 3 shows a simplified screen mock-up 300 to illustrate an interaction of either a non-expert user or an expert user in the field of formal verification, with a Graphical User Interface (GUI) that has been developed for operating formal verification operations, and more specifically such formal verifications with the model checker tool of the invention.

The GUI may be implemented on a general purpose computing device such as the one 102 shown on figure 1.

Starting with an initial navigation bar showing two independently selectable buttons, a user may first select a flow 310 for a non-expert user, or select a flow 320 for an expert user.

The left side of figure 3 shows a flow of the interaction of an expert user 320 to initiate a verification process. The expert user simply uploads a model and a formula 322, both specified in text files (supported by and following the rules implemented in the corresponding model and formula parsers). Once the model and formula are directly defined by the expert user, a verification operation 324 may be processed.

The right side of figure 3 shows a flow of the interaction of a non-expert user 310 to initiate a verification process.

The objective is to highlight how the novel framework guides a user to initiate a model checking verification process for MAS, by asking the user a plurality of questions regarding the information needed to perform verification, i.e. information to define a model 312 and information to define a logical formula 314.

For instance, the guided GUI for a non-expert user is configured to ask the user questions to allow to correctly define a model and a formula.

As to the definition of a model, the guided GUI allows asking questions for example about a number of agents he/she wants in the system, questions about actions the user wants the agents to perform, as well as any other useful question(s) required to properly populate a model for MAS to verify.

As to the definition of a formula, the guided GUI allows asking questions for example about a property the user wants to verify, questions about a temporal goal to be achieved by the agents, as well as any other useful question(s) required to properly define a logical formula representing the property to be verified.

Once all questions are answered, the system may generate a model and a logical formula, based on a synthesis of the collected answers, to thereby process the verification 316.

In an embodiment, the guidance for defining a formula is based on a framework similar to the well-known "FRET" component which is a framework to facilitate the definition of formal properties in constrained natural language and facilitate the formal representation of the system to be verified.

Such guidance system of the invention is a framework for the solicitation, formalization, and understanding of requirements. It allows a user to enter system requirements in a structured natural language (natural language description).

Advantageously, the guided GUI of the invention allows providing models and logical formulas in a format that can be directly used by the model checking tool 130 of the present invention.

Going back to figure 2, once a model and a formula have been generated, either in a guided or in a non-guided way, the verification process may continue.

In an embodiment, the model and the logical formula may be first checked through a parsing component 206 to parse a received model during a model parsing step 208, and to parse a received logical formula during a formula parsing step 210.

The parsing operations allow acknowledging a syntactically error-free internal representation of both a model and a logical formula.

In case, a received model and a received formula are already syntactically error-free (for example in a variant where parsing functions are integrated in the GUI framework, or when a previous syntactically error-free representation is reused), a parsing step integrated within the model checker tool may be omitted.

It is to be noted that in case a parsing operation returns a result that the inputs are not syntactically error-free, the user needs to resubmit a new model and formula to be further parsed.

The person skilled in the art would implement parsing functions in various common ways.

The process then continues with a Model Checker selection step 212. The MC selection step is driven by the Model Checker interface (140 in figure 1) which is configured to analyze the model and the formula (i.e. both being syntactically error-free) and to select the most suitable model checker component for applying a verification step 214.

The MC selection step 212 allows selecting a MC component among a plurality of model checker components, wherein a model checker component is an entity which defines a class of model and a class of logic analyzing methods.

In an embodiment, the MC selection step comprises the steps of:
- analyzing a model to determine to which class of models the model belongs among a plurality of predefined classes of models;
- analyzing a logical formula to determine to which class of logics the logical formula belongs among a plurality of predefined logics;
- selecting a combination of a model with logics among the determined class of models and the determined class of logics; and
- determining a class of analyzing method for the selected combination, wherein the analyzing method being one of an explicit or an implicit or an abstract analyzing method, thereby providing a model checker component for verification.

In an embodiment, the selection step may perform further analyses to determine the most suitable model checker component, reasoning on the models and formulas.

In an embodiment, the model checker selection step allows reasoning upon the number of states of the model and depending upon such number deciding to perform an explicit verification, an implicit verification, or an abstract verification.

That is, in case of a large but still feasible number of states, a selection could be steered towards a more implicit verification, to tackle the complexity by reducing the size of the model (encoded symbolically as a set of Boolean formulas).

One could note that this could not be enough in a scenario with a huge number of states (that are infeasible to be stored and manipulated), where the selection mechanism would exploit the abstraction to tackle the complexity and bring the number of states to a feasible amount (which in turn could trigger further steps of encoding of the model and formulas).

After the MC selection step, the process continues with a property verification step 214. During the verification step, the selected model checker component is operated with the model and the logical formula thereby checking whether the multi-agent system satisfies the property.

At the end the process provides the result of the verification step.

In an embodiment, the result is displayed on a display interface of a user computing device.

The logical operations of the various embodiments can be implemented as: (1) a sequence of computer implemented steps, operations, or procedures running on a programmable circuit within a general use computer; (2) a sequence of computer implemented steps, operations, or procedures running on a specific-use programmable circuit; and/or (3) interconnected machine modules or program engines within the programmable circuits.

Going now to figure 4, a schematic block diagram of the components for selecting a model checker component according to an embodiment of the invention is described.

Advantageously, the model checking tool of the invention allows for applying different verification methodologies to solve a model checking task.

One knows the explicit model checking approach, the implicit one, and the abstract one. While this list of approaches is not exhaustive, it comprises the most famous ones that are named only to highlight that there are different approaches to tackle the verification process according to the invention.

In the explicit model checking, the model and the formula are treated explicitly, that is there is not a specific optimization method to handle the size of the model and formula under exam.

In the implicit model checking, the model and the formula are converted into a symbolic representation, e.g. Boolean formulas. Given this approach, it is possible to reduce the size of the model and the formula under analysis and, consequently, reduce the computational complexity for providing a result.

In the abstract model checking, the original model is converted into a new model with a more succinct size. In this way, it is possible to improve the computational complexity of the model checking procedure.

As mentioned before, the software architecture of the present invention is based upon the notion of modularity.

As such, the Model Checker Components 406 is coupled to a set of Models 402 (also named Models component or Models in short) and to a set of Logics 404 (also named Logics component or Logics in short).

The Models 402 may address a plurality of independent predefined classes of models, and the Logics 404 may address a plurality of independent predefined classes of logics.

The predefined classes of models are defined in the Models as a modular and hierarchical structure.

In a preferred embodiment, the Models component 402 is organized with two main classes of models: a class of Monolithic models and a class of Multi-Agent models.

The class of Monolithic models is composed of a plurality of models for closed systems like the Kripke Structure (KS) model or the Labeled Transition System (LTS) model to name a few of such known monolithic models.

The class of Multi-Agent models is composed of a plurality of models for multi-agent systems like the Interpreted System (IS) model or the Concurrent Game Structure (CGS) model to name a few of such known multi-agent models.

Similarly, the predefined classes of logics are defined in the logics component as a modular and hierarchical structure.

In a preferred embodiment, the Logics component 404 is organized with two main classes of logics: a class of Temporal logics and a class of Strategic logics.

The class of Temporal logics is composed of a plurality of temporal logics modules for temporal reasoning like the Linear Temporal Logic (LTL) or the Computation Tree Logic (CTL) to name a few of such known temporal logics.

The class of Strategic logics is further composed of a plurality of strategic logics modules for strategic reasoning like the Alternating-time Temporal Logic (ATL) or the Strategy Logic (SL) to name a few of such known strategic logics.

Advantageously, the independence between the Models component 402 and the Logics component 404, and the further independence of each class inside each component, offer a highly extendable software system.

Such modular organization, with the independence of the logics and the models, allows an easy implementation and evolution of the system.

Furthermore, in contrast to existing model checking techniques, the modular structure of the present invention facilitates maintenance which can be obtained in isolation for each module, since usually the logics and models are hard-coded in the system, they can hardly be changed or extended without working on the existing code.

The modular architecture of the present invention and the distributed nature of how the logics and models are implemented foster extensions and upgrades, without the risk of damaging existing components, as modifications of one component will not affect the behavior of other components.

The notion of a modular model checker is novel. In literature, one can find solutions that try to keep up with new logics and formalisms by extending an initial core through additional patches. Conversely, the present invention proposes a stable architecture that natively supports modularity, having a module for each formal model and logic.

Each formal model and logic can be used to solve problems related to different domains of application such as security, auctions, voting protocols, autonomous vehicles, etc.

Going back to figure 4, the Model Checker Components 406 which interfaces the selection component of the model checking tool with the Models 402 and the Logics 404, is configured to provide back a model checker component, i.e. a combination of a model with logics and a class of analyzing method.

As previously described, the model checker interface is configured to analyze a model and a logical formula that is received to operate a verification, and to determine to which class of models the received model belongs, and to which class of the logical formula belongs.

A model checker components 408 thus defines a hierarchy of analyzing methods. As illustrated in figure 4, a model checker component may be a Temporal Model Checker 410 or a Strategic Model Checker 412.

As an example, one assumes a given logical formula written in ATL is received with a model description of a multi-agent system. The model checker interface allows determining that the model description pertains to the class of Multi-Agents models and that the logical formula pertains to the class of Strategic logics, and more precisely to the class of Alternating-time Temporal Logic.

In this example, a model checker component is one of the type Strategic Model Checker 412, i.e. a combination of a MAS model and ATL logic.

The model checker components then allows determining for the selected combination which class of analyzing method is the most suitable verification algorithm, i.e. either an explicit or an implicit or an abstract analyzing method.

While the example is purposely simplified for description of the general principles of the invention, one skilled in the art would define additional types of Models, of Logics and of analyzing methods.

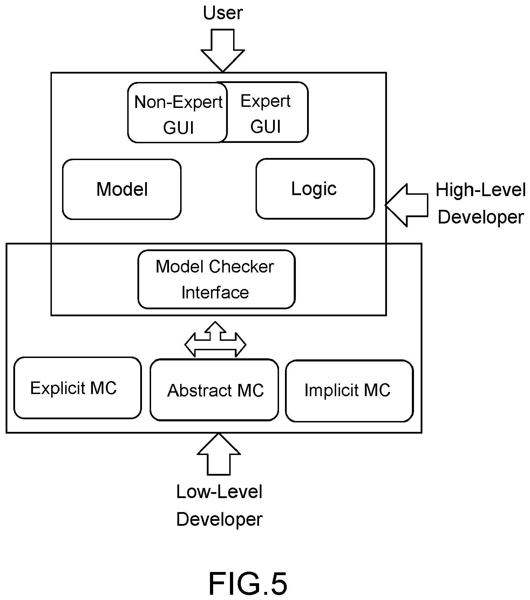

The usability capacity of the model checking tool of the present invention is illustrated with figure 5. The proposed architecture is based on a decoupling of the front-end and the back-end of the application. Specifically, the model checking tool should grant access to users through a user-friendly Graphical User Interface (GUI), which is cross-platform and available on any operating system. The GUI should guide the inexperienced user (through the verification process), while enhancing the experience for the expert one.

As depicted in figure 5, the tool includes several software blocks which allow modularity characteristics. An important characteristic of the model checking tool of the present invention is its modularity and thereby its flexibility.

The tool allows its usage by three different types of users, who are divided in terms of their expertise and purposes: (i) User, (ii) High-Level Developer, and (iii) Low-Level Developer.
(i) A User corresponds to an End-User (EU) of the application, that is a user who is not a developer, and who aims only at using the MC tool features. Such a user can interact with the software through a Graphical User Interface (GUI) already described which is defined in two different categories: GUI for *expert* and GUI for *non-expert* of model checking (MC) for Multi-Agent Systems (MAS).

Other than the standard User (i), the MC tool allows access to two levels of developer users: (ii) the High-Level Developer who focuses on formal verification aspects, and (iii) the Low-Level Developer who focuses on the optimization and low-level implementation.

The High-Level Developer users are ones with experience in model checking in multi-agent systems. They are the ones in charge of developing the Models components and the Logics components. They can do as such by extending existing models and logics, or by incorporating new ones in the architecture from scratch. Advantageously, as each model of the Models component or each logic of the Logics component is developed as an independent module, enriching the Logics and/or Models component with a new module does not introduce errors into previously validated modules. These developers do not concern themselves on how to create high performance software solutions, but instead focus on how to properly define and verify the models and logics in the system.

The job of making such implementation optimized is handled by the low-level developer users who are ones with experience in model checking in multi-agent systems but with also expertise in software engineering. They are in charge of improving the implementation provided by the high-level developers by exploiting optimization techniques. Such optimization can be both at the algorithmic and data structure level.

For instance, a high-level developer may have proposed a logic and its verification on an explicit model, while a low-level developer, starting from such implementation, may provide an optimized solution based on the verification of an implicit model, e.g., through Binary Decision Diagrams (BDD).

To bridge the gap between the two types of developers, the inventors have built the Model Checker Interface component. Such a component is developed by the low-level developers and is meant to be exploited by the high-level developers to seamlessly interact with the optimizations.

For instance, by using an automata theoretic approach, one may have an Alternating-tree Automaton component that can be implemented by the low-level developer and used, to implement new verification techniques, by the high-level developer.

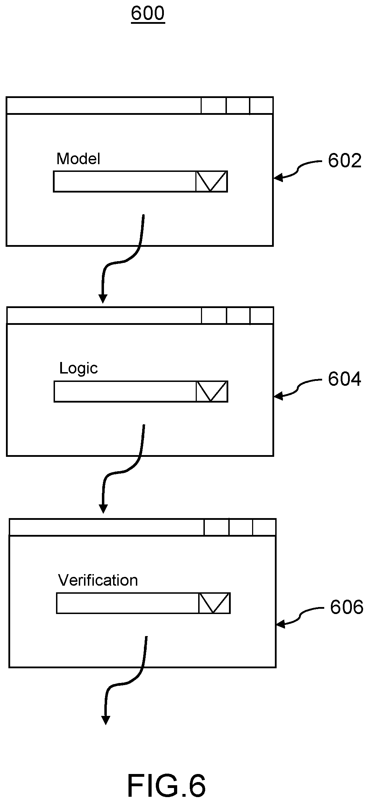

Figure 6 illustrates, in a simplified view, a Graphical User Interface 600 dedicated to high-level developers.

The modular architecture of the system of the present invention is built to allow a developer to use a specific novel interface to upload his/hers instantiations of model 602, of formula 604, and of resulting verification technique 606.

Thanks to the separated interfaces, a high-level developer that wishes to extend the tool, can do so in a guided way.

Each file that is to be uploaded needs to follow a predetermined format, that is called a "skeleton" and which serves as a guideline for the high-level developer in the implementation of the model, the formula, and the model checking technique.

For instance, one developer may want to add the notion of Concurrent Game Structure as a Model through the interface 602.

The algorithm allows determining if this model is already supported in the current architecture or not. In case such a model is already defined in the set of Models, the system is configured to inform the developer about it.

The developer has then the possibility to decide what to do next. If the developer wants to add the model in the framework, then the process may continue to the next interface 604 of defining a logic, wherein the algorithm allows determining if this logic is already supported in the current architecture or not.

If a developer who is informed that a model is already defined in the framework, but who nevertheless wants to add an alternative instantiation, then the interface is configured to offer the developer to still continue uploading the model.

This process is repeated in the same way for entering logics and verification methods.

One can note that, the operations of adding a model, a logic, or a verification method that already exist, may be used by a developer as a way to improve the overall system itself. For instance, a bug may be fixed in this way, or an improvement of an instantiation may benefit from this. In the previous example, the developer could improve the way to represent a model, and allow to extend the system to let other users or developers benefit from his/hers improved version.

It is to be appreciated that the novel modular architecture of the present invention along with the specific developer interfaces, allows extending the framework capabilities without ever impacting its core. That is, external developers can change specific aspects, such as models, formulas, and so on, without changing the core components of the framework, nor its architecture. Therefore, from developers perspective, the extensions to the framework are just black boxes of which they do not care about the internal implementation. This emphasizes the importance and the advantage of having a developer interface to offer a framework that is both highly extendable and highly maintainable.

The present description illustrates one embodiment of the invention, but is not limiting. The examples were chosen to allow a good understanding of the principles of the invention, and some specific applications, but they are not exhaustive; nevertheless, the description should allow a person skilled in the art to provide modifications and implementation variants while keeping the same principles.

## Claims

1. A model checking tool (130) for verifying a property of a multi-agent system, the multi-agent system being described in the form of a syntactically error-free model description and the property being defined by a syntactically error-free logical formula, the model checking tool comprising:
- a selection component (134) configured for selecting a model checker component among a plurality of model checker components, wherein a model checker component defining a class of models, a class of logics, and an analyzing method, the model checker component being selected according to the syntactically error-free model description and logical formula; and
- a verification component (136) configured for operating the selected model checker component with the syntactically error-free model description and logical formula and for checking whether the multi-agent system satisfies the property.

2. The model checking tool according to claim 1, wherein the selection component is further coupled to a model checker interface (140) configured to analyze the syntactically error-free model description and logical formula, to determine to which class of model among a plurality of predefined classes of models (120) the syntactically error-free model belongs, and to which class of logics among a plurality of predefined classes of logics (110) the syntactically error-free formula belongs.

3. The model checking tool according to 2, wherein the model checker interface is further configured to determine, given a combination of a model with a logic, an analyzing method based on model and logic specifications of the syntactically error-free model and logical formula, like a number of states or a number of strategic quantifiers.

4. The model checking tool according to anyone of claims 1 to 3, wherein the analyzing method is selected in a group comprising at least implicit analyzing methods, explicit analyzing methods, abstracted analyzing methods.

5. The model checking tool according to anyone of claims 1 to 4, wherein a class of logics may be temporal logics or strategic logics.

6. The model checking tool according to claim 5, wherein a class of temporal logics may be a Linear Temporal Logic (LTL) or a Computation Tree Logic (CTL).

7. The model checking tool according to claim 5, wherein a class of strategic logics may be an Alternating-time Temporal Logic (ATL) or a Strategy Logic (SL).

8. The model checking tool according to anyone of claims 1 to 7 further comprising a parsing component (132) configured for checking a model description representing a multi-agent system is a syntactically error-free model description and for checking a logical formula defining a property to be verified for the multi-agent system is syntactically error-free.

9. A system for verifying properties of a multi-agent system within a communication network (106), comprising:
- an input component (102) configured for entering data allowing to define a multi-agent system by a model description and to define a property of the multi-agent system to be verified by a logical formula; and
- a model checking tool (130) as claimed in anyone of claims 1 to 7, for receiving from the input component data comprising a model description of the multi-agent system and a logical formula defining a property of the multi-agent system to be verified.

10. The system of claim 9 wherein the input component comprises a graphical user interface (300) configured for allowing a non-expert user or an expert user in the field of formal verification entering data to define the model and the property.

11. The system of claim 10 wherein the graphical user interface is configured to allow a non-expert user entering data (312, 314) in natural language, and to allow an expert user entering data (322) in a text-based input language.

12. The system of anyone of claims 9 to 11 wherein the input component is further configured for displaying (316, 324) a result provided by the verification component of the model checking tool.

13. The system of anyone of claims 9 to 12, further comprising a computing device (104) having a graphical user interface (600) configured for allowing a software developer in the field of formal verification to define and develop models (602), logics (604), and verification methods (606) for the model checking tool.

14. A computer implemented method for verifying properties of a multi-agent system, the method being operated on a syntactically error-free description of a model representing a multi-agent system and on a syntactically error-free logical formula defining a property of the multi-agent system to be verified, the method comprising the steps of:
- selecting a model checker component among a plurality of model checker components, wherein the selected model checker component defining a class of models, a class of logics and an analyzing method, the model checker component being selected according to the syntactically error-free model description and logical formula; and
- operating the selected model checker component with the syntactically error-free model description and logical formula for checking whether the multi-agent system satisfies the property.

15. The method according to claim 14, wherein the step of selecting a model checker component comprises the steps of:
- analyzing the syntactically error-free model description to determine to which class of models among a plurality of predefined classes of models, the syntactically error-free model belongs;
- analyzing the logical formula to determine to which class of logics among a plurality of predefined logics, the syntactically error-free logical formula belongs; and
- selecting a combination of a model with a logic among the determined class of models and class of logics, and of an analyzing method.

16. The method according to claims 14 or 15 further comprising the steps of:
- receiving a description of a model representing a multi-agent system and a logical formula defining a property of the multi-agent system to be verified;
- parsing the received model description and logical formula to check if the model description and the logical formula are syntactically error-free; and
- in case the model description or the logical formula are not syntactically error-free, reformulating the model and the logical formula.

17. The method according to anyone of claims 14 to 16 further comprising the step of defining a model description and a logical formula through a graphical user interface, said graphical user interface being configured for allowing a non-expert user or an expert user entering data to define a model description and a logical formula.

18. The method of claim 17 wherein the step of entering data to define a model description and a logical formula is realized in natural language for a non-expert user.

19. The method of claim 17 wherein the step of entering data to define a model description and a logical formula is realized in a text-based input language for an expert user.

20. A computer program product, said computer program product comprising code instructions for performing, when executed by a computer, the steps of the method according to anyone of claims 14 to 19.

21. A general purpose computing device comprising a graphical user interface (300) configured for defining in natural language a model description of a multi-agent system and a property to be verified by a logical formula, thereby allowing a non-expert user in the field of formal verification to proceed with the verification process.

22. The general purpose computing device of claim 21 wherein the graphical user interface is further configured for defining in text-based input language a model description of a multi-agent system and a property to be verified by a logical formula, thereby allowing an expert user in the field of formal verification to proceed with the verification process.

23. A computing device comprising a graphical user interface (600) configured for allowing a high-level software developer in the field of formal verification to upload instantiations of models, of formulas, and of model checking methods.
